# EUROPEAN PATENT APPLICATION

(11) **EP 4 782 962 A1**
(43) Date of publication of application: **29.07.2026**
(21) Application number: 26154028.0
(22) Date of filing: 26.01.2026
(51) Int. Cl.: G06F 1/24

(54) **COMPLETE SYSTEM POWER CYCLE DETECTION AND RELATED METHODS**

(30) Priority: 27.01.2025 US 202519038133
(71) Applicant: Microsoft Technology Licensing, LLC, Redmond, WA 98052 (US)
(72) Inventor: LYAKHOV, Alexander, Redmond, 98052 (US); SUTTON, Brian M., Redmond, 98052 (US); KATAM, Dinesh, Redmond, 98052 (US)
(74) Representative: CMS Cameron McKenna Nabarro Olswang LLP

(57) **Abstract**

A processor system may include multiple circuits that are each powered by their own power rails. Incomplete cycling of system power may fail to discharge memory circuits, leaving that data vulnerable to unauthorized access upon reboot. A processor system includes a boot detection circuit that, upon detecting a threshold voltage on a first power rail in the bootup sequence, captures voltage measurements on each of the remaining power rails in multiple time periods, wherein the captured voltage measurements may be analyzed to determine whether the voltages on the power rails fully cycled to a sufficiently low voltage and remained there for a sufficient time to ensure that memory circuits adequately discharged. The power system may proceed to generate an indication of complete reset or incomplete reset depending on the voltage measurements stored in the memory. In this way, the confidentiality of data previously stored in the memory circuits is protected.

## Description

### Field of the Disclosure

The technology of the disclosure relates, in general, to data security in a processor or system and, more particularly, to avoiding data attacks based on false system reboot.

### Background

Datacenter processor systems are trusted to securely store the confidential data of users (e.g., individuals, companies, and/or governments). To keep data secure, the processing systems must be designed with the assumption that the datacenter personnel cannot be trusted. One point of security exposure in such systems is data that continues to be stored in memory circuits when a system is not fully reset during a reboot/restart event. When the power supply provided to the memory does not reach a sufficiently low voltage and stays at such voltage for a sufficient period of time, residual data from before the reset may still be retained in the memory circuits. During a bootup or reboot event, a processor receives a "power good" signal to indicate that all the power rails providing power to the circuits of the processor system are at their respective desired voltages. The power good signal may be generated from outside the processor, so it is assumed that the power good signal also cannot be trusted. For example, if the power supply to the memory circuits is not completely reset to allow the circuits to discharge, but the power good signal indicates that the power supply has been reset, the data stored in the memory circuits prior to the incomplete reset may still be retained in the memory circuits, where they may be vulnerable to unauthorized access. To avoid such access, a processor system needs a reliable indication that the power supply has been completely reset or an alternative mechanism to ensure that data previously stored therein is inaccessible.

### Summary

Exemplary aspects disclosed herein include complete system power cycle detection. Related methods of detecting complete cycling of system power are also disclosed. A processor system may include multiple circuits that are each powered by their own power rails with independent power controls and different voltage requirements. An incomplete cycling of the system power provided to circuits in a system reset may fail to discharge memory circuits in which confidential data is retained, leaving that data vulnerable to unauthorized access upon reboot. An exemplary processor system includes a boot detection circuit that, upon detecting a threshold voltage on a first power rail in the bootup sequence, captures voltage measurements on each of the remaining power rails in multiple time periods, wherein the captured voltage measurements may be analyzed to determine whether the voltages on the power rails fully cycled to a sufficiently low voltage and remained there for a sufficient time to ensure that the memory circuits adequately discharged. In some examples, based on the voltage measurements stored in the memory, the power system may generate an indication of incomplete reset or complete reset to indicate whether it would be safe to proceed to normal operation, limited operation, reboot operation or another mode of operation to maintain data security. In this manner, the confidentiality of data previously stored in the memory circuits is protected.

In one exemplary aspect, a processor system is disclosed. The processor system includes a plurality of circuits comprising a first circuit and a plurality of second circuits. The processor system further includes a first power rail coupled to the first circuit to provide a first supply voltage to the first circuit; and a plurality of second power rails, each coupled to a corresponding second circuit of the plurality of second circuits and configured to provide a corresponding second supply voltage of a plurality of second supply voltages to the corresponding second circuit. The processor system further includes a boot detection circuit configured to detect the first supply voltage on the first power rail exceeds a first threshold; and, in response to the first supply voltage on the first power rail exceeding the first threshold, record a measurement of each of the plurality of second supply voltages of the plurality of second power rails in each period of a plurality of periods.

In another exemplary aspect, a method in a processor system is disclosed. The method includes supplying a first supply voltage to a first circuit on a first power rail, supplying a plurality of second supply voltages to a plurality of second circuits on a plurality of second power rails, detecting that the first supply voltage on the first power rail exceeds a first threshold, and, in response to detecting the first supply voltage on the first power rail exceeds the first threshold, recording measurements of the plurality of second supply voltages on the plurality of second power rails in each period of a plurality of periods.

In another exemplary aspect, a boot detection circuit is disclosed. The boot detection circuit includes a first voltage detection circuit configured to detect that a first supply voltage on a first power rail in a processor system exceeds a first threshold, and a voltage capture circuit configured to, in response to the first voltage detection circuit detecting the first supply voltage on the first power rail exceeds the first threshold, record, in each period of a plurality of periods, digital measurements of each second supply voltage of a plurality of second supply voltages on a plurality of second power rails in the processor system.

### Brief Description of the Drawing Figures

The accompanying drawing figures incorporated in and forming a part of this specification illustrate several aspects of the disclosure and, together with the description, serve to explain the principles of the disclosure.
Figure 1 is a schematic diagram of a processor system including multiple circuits powered by separate power rails and a boot detection circuit to record voltage measurements of the power rails to determine whether each of the power rail voltages was completely cycled to discharge memory circuits in a reset event;
Figure 2 is a timing diagram showing the supply voltages on power rails increasing in sequence in the processor system of Figure 1 following a reset event;
Figure 3 is a timing diagram of the control signals in the boot detection circuit in Figure 1 for storing voltage measurements in a plurality of periods following a reset event;
Figure 4 is a flowchart of a method of recording voltage measurements on the power rails of a processor system following a reset event; and
Figure 5 is a block diagram of an exemplary processor-based system that comprises a boot detection circuit to record voltage measurements of power rails following a system reboot event to determine whether power rail voltages were completely cycled to discharge memory circuits.

### Detailed Description

With reference to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Exemplary aspects disclosed herein include complete system power cycle detection. Related methods of detecting complete cycling of system power are also disclosed. A processor system may include multiple circuits that are each powered by their own power rails with independent power controls and different voltage requirements. An incomplete cycling of the system power provided to circuits in a system reset may fail to discharge memory circuits in which confidential data is retained, leaving that data vulnerable to unauthorized access upon reboot. An exemplary processor system includes a boot detection circuit that, upon detecting a threshold voltage on a first power rail in the bootup sequence, captures voltage measurements on each of the remaining power rails in multiple time periods, wherein the captured voltage measurements may be analyzed to determine whether the voltages on the power rails fully cycled to a sufficiently low voltage and remained there for a sufficient time to ensure that the memory circuits adequately discharged. In some examples, depending on the voltage measurements stored in the memory, the power system may generate an indication of incomplete reset or complete reset to indicate whether it would be safe to proceed to normal operation, limited operation, reboot operation or another mode of operation to maintain data security. In this manner, the confidentiality of data previously stored in the memory circuits is protected.

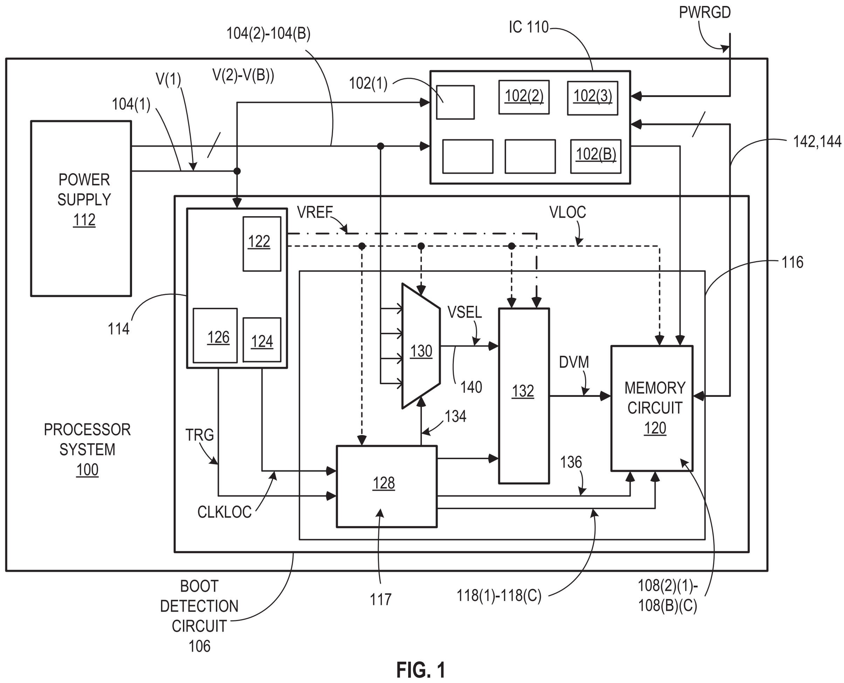

Figure 1 is a processor system 100 including multiple circuits 102(1)-102(A) powered by respective power rails 104(1)-104(B). The processor 100 also includes a boot detection circuit 106 ("boot detector 106") to record voltage measurements 108(2)(1)-108(B)(C) of the power rails 104(2)-104(B) to determine whether supply voltages V(2)-V(B) were completely cycled in a reset event of the processor system 100. In this context the term "completely cycled" with reference to a reset event (or reboot) means that the supply voltages V(2)-V(B) provided to the circuits 102(2)-102(A) on the power rails 104(2)-104(B) decreased to sufficiently low levels (e.g., below 0.2 volts) and remained there for sufficient time to ensure that memory circuits (not shown) in each of the circuits 102(2)-102(A) were fully discharged. In a fully discharged memory circuit, no data previously stored therein is retained after the reset event. The boot detection circuit 106 is provided in the processor system 100 for this purpose to ensure that there is no risk of exposure of residual confidential data remaining in the memory circuits from previous operation that could be accessed by unauthorized persons or applications after the boot event.

The multiple circuits 102(1)-102(A) may include processors, processing circuits, storage circuits, interface circuits, clocking circuits, etc. or any types of circuits that may be included on an integrated circuit (IC) 110, such as a system-on-chip (SoC). The supply voltages V(1)-V(B) in this example are generated in a power supply 112 in the processor system 100. In some examples, the supply voltages V(1)-V(B) may be generated by multiple voltage supply circuits or other power supplies that may be internal or external to the processor system 100. To protect against unauthorized access to confidential data that may be retained in memory or storage circuits of any kind in the processor system 100 after a reset event, the supply voltages V(1)-V(B) should be completely cycled. For example, the term "memory or storage circuits" in this context may include flip-flops, latches, registers, static random access memory (SRAM), embedded dynamic random access memory (DRAM) or any other type of volatile storage element.

In a reset event, which may be referred to as a "reset", "reboot", "restart", "power cycle," etc., the supply voltages V(1)-V(B) are typically decreased to correspond to an "OFF" state in the IC 110. Subsequently, to return to normal operations, the power supply 112 increases the supply voltages V(1)-V(B) one at a time in a power-up sequence, which may be necessary to avoid sudden increases in current. Activation of a "power good" signal PWRGD is an indication that the power-up sequence is finished and the supply voltages V(1)-V(B) have reached normal operating levels, at which time the multiple circuits 102(1)-102(A) may initiate normal operation. For example, one of the circuits 102(1)-102(A) may be a processor circuit that begins fetching instructions in response to the power good signal PWRGD transitioning from an inactive state to an active state. However, the power good signal may be provided to the processor system 100 from an external source and, therefore, may not be trustworthy. Thus, there is a need to positively determine whether the voltages V(1)-V(B) of the power rails 104(1)-104(B) were actually completely cycled before the power good signal PWRGD is activated.

In the power-up sequence employed in the processor system 100, the power supply 112 first increases the supply voltage V(1) on the power rail 104(1) to a normal operating level before increasing the voltages on the other power rails 104(2)-104(B). In some examples, the first circuit 102(1) may be the only circuit that is powered by the first supply voltage V(1) and the first circuit 102(1) may not include any memory or storage circuits in which confidential data could be retained. For example, the first supply voltage V(1) may be used to supply power to general-purpose input-output (GPIO) circuits, which do not include data storage circuits. In such examples, there would be no risk of exposing confidential data retained after a reset, even if the first supply voltage V(1) is not completely cycled. However, to maintain security of the confidential data in the processor system 100, a determination of whether the remaining supply voltages V(2)-V(B) are completely cycled is needed.

In an exemplary aspect, the boot detection circuit 106 includes a voltage detection circuit 114 that detects that the supply voltage V(1) on the power rail 104(1) exceeds a first threshold TH1 (not shown). For example, the boot detection circuit 106 may determine that the supply voltage V(1) increased from below the first threshold TH1 up to at least the first threshold TH1 and the boot detection circuit 106 may interpret such increase as an indication that the power supply 112 has started the power-up sequence. The boot detection circuit 106 also includes a voltage capture circuit 116 that, in response to the indication from the voltage detection circuit 114 that the supply voltage V(1) on the first power rail 104(1) exceeds the threshold TH1, begins a process of recording measurements 108(2)(1)-108(B)(C) of the supply voltages V(2)-V(B) corresponding to the power rails 104(2)-104(B) in each period of multiple periods. The voltage capture circuit 116 may receive the trigger signal TRG and generate a capture start signal 117 to initiate the recording process. During such process, the supply voltages V(2)-V(B) are measured by the voltage capture circuit 116 to generate the measurements 108(2)(1)-108(B)(1), which are recorded (e.g., sequentially) during a first period of time 118(1) in a memory circuit 120. The memory circuit 120 may be a set of first-in-first-out (FIFO) registers, for example, or any other appropriate memory circuit. Then, in a next period 118(2), new measurements 108(2)(2)-108(B)(2) are captured by the voltage capture circuit 116 and recorded in the memory circuit 120. The process continues in subsequent periods 118(3)-118(C) to capture the measurements 108(2)(3)-108(B)(C). As the periods 118(1)-118(C) are periods of time, they are not illustrated in the diagram in Figure 1.

Following the periods 118(1)-118(C), the process for recording the measurements 108(2)(1)-108(B)(C) is complete and the boot detection circuit 106 may become inactive. Subsequently, when the power good signal PWRGD is activated in the processor system 100, one of the circuits 102(2)-102(A) (e.g., a service processor or secure processor) may read and analyze the measurements 108(2)(1)-108(B)(C) from the memory circuit 120 to determine whether all of the supply voltages V(2)-V(B) were completely cycled. In more detail, the measurements 108(2)(1)-108(B)(1) taken in the first period 118(1) are read from the memory circuit 120 and compared to a low voltage threshold TH2 to determine whether the supply voltages V(2)-V(B) were decreased to a sufficiently low level that would allow any memory circuits in the circuits 102(2)-102(A) to begin to discharge. The respective supply voltages V(2)-V(B) may each be compared to the same low voltage threshold TH2 or they may be compared to different low voltage thresholds, which may depend on the types of memory/storage circuits they contain.

Next, the measurements 108(2)(2)-108(B)(2) that were recorded in the second period 118(2) are read from the memory circuit 120 and compared to the low voltage threshold(s) TH2 and the measurements 108(2)(3)-108(B)(3) recorded in the third period 118(3) are read from the memory circuit 120 and compared to the low voltage threshold(s) TH2. This analysis process continues for each of the periods 118(1)-118(C) to determine that the supply voltages V(2)-V(B) decreased to below the low voltage threshold TH2 and remained there (below TH2) for at least two (or more) periods. From such comparisons it may be determined whether the memory circuits in the circuits 102(2)-102(B) were able to fully discharge or be fully depleted of the memory previously stored therein. Analysis of the measurements 108(2)(3)-108(B)(3) may be performed by the IC 110, or more particularly, a secure processor in the IC 110, which may be one of the circuits 102(2)-102(A). Based on this analysis, the boot detection circuit 106 may be configured to generate an indication of incomplete reset 142 in response determining that at least one of the second supply voltages V(2)-V(B) did not completely cycle, or generate an indication of complete reset 144 in response determining that all the supply voltages V(2)-V(B) completely cycled.

As noted above, the voltage detection circuit 114 detects that the supply voltage V(1) on the power rail 104(1) exceeds the first threshold TH1. The first threshold TH1 may correspond to a minimum voltage with which to provide reliable switching control of transistors. In this regard, the voltage detection circuit 114 includes a reference voltage generator 122 that receives the first supply voltage V(1) and, upon the first supply voltage V(1) reaching the first threshold TH1, generates a local supply voltage VLOC and a reference voltage VREF. The local supply voltage VLOC supplies power to the voltage capture circuit 116 as well as to components internal to the voltage detection circuit 114. In addition to the reference voltage generator 122, the voltage detection circuit 114 in this example includes a clock generator 124, which may be a ring oscillator circuit, for example, for generating a local clock signal CLKLOC that is provided to the voltage capture circuit 116 to activate circuits for measuring and capturing the measurements 108(2)(1)-108(B)(C). The measurements 108(2)(3)-108(B)(3) may be captured sequentially in respective cycles of the local clock signal CLKLOC and the durations of the periods 118(1)-118(C) may be multiples of a clock period of the local clock signal CLKLOC. The voltage detection circuit 114 also includes a trigger circuit 126 to generate a trigger signal TRG, which is an indication to the voltage capture circuit 116 to start a sequence of measuring and capturing the supply voltages V(2)-V(B).

The voltage capture circuit 116 includes a control circuit 128, which may include a state machine or sequential logic to control the sequence of measuring and capturing the supply voltages V(2)-V(B). The voltage capture circuit 116 includes a selector circuit 130 that receives each of the supply voltages V(2)-V(B) and provides a selected voltage VSEL on a measurement node 140 coupled to a voltage measurement circuit 132. The selected voltage VSEL is a selected one of the supply voltages V(2)-V(B), which is selected based on a selection signal 134 from the control circuit 128. The voltage measurement circuit 132 receives the selected voltage VSEL on the measurement node 140 and, in response to a capture signal 136 from the control circuit 128, generates a digital measurement DM that is a digital (e.g., binary) value indicating the voltage of the selected voltage VSEL. The digital measurement DM is provided to the memory circuit 120, which may be internal or external to the voltage capture circuit 116. The memory circuit 120 may be a memory buffer, a first-in-first-out (FIFO) register circuit, or any appropriate data storage circuit with capacity to store digital measurements DMs of each of the supply voltages V(2)-V(B) from each of the periods 118(1)-118(C).

Capturing a digital measurement DM of each of the supply voltages V(2)-V(B) may include activating the capture signal 136 and sequentially selecting, one at a time, each of the supply voltages V(2)-V(B). The supply voltages V(2)-V(B) may be captured in any order. In some examples, not shown here, there may be multiple voltage measurement circuits 132 to allow more than one of the supply voltages V(2)-V(B) to be captured at a time.

A digital measurement DM may be captured for each of the supply voltages V(2)-V(B) in a first period of time under the control of the control circuit 128 and this process may be repeated multiple times. For example, after capturing the digital measurement DM for each of the supply voltages V(2)-V(B) in order, sequentially, the control circuit 128 may restart the sequence immediately to capture them all again. Alternatively, the control circuit 128 may pause for a predetermined period of time before restarting the capture sequence. That is, in a first period 118(1), the measurements 108(2)(1)-108(B)(1) may be stored in the memory circuit 120. In a second period 118(2), the measurements 108(2)(2)-108(B)(2) may be stored in the memory circuit 120, and so on until period 118(C), in which the measurements 108(2)(C)-108(B)(C) are stored in the memory circuit 120. After all the measurements 108(2)(1)-108(B)(C) have been stored in the memory circuit 120 for all the desired periods 118(C), the capture sequence of the control circuit 128 is completed.

Subsequently, the power good signal PWRGD is received in the processor system 100 and the contents of the memory circuit 120 may be read. As an example, a service processor or secure processor may read all the measurements 108(2)(1)-108(B)(C) to determine whether the supply voltages V(2)-V(B) were low enough in multiple consecutive periods to ensure that any memory or storage circuits in any of the circuits 102(2)-102(A) have been discharged and no longer retain any data previously stored therein.

Based on the measurements 108(2)(1)-108(B)(C), the boot detection circuit 106 is configured to generate either the indication of incomplete reset 142 or the indication of complete reset 144. The indication of complete reset 144 and the indication of incomplete reset 142 may be provided to the secure processor or supervisory processor, which may be in the IC 110. The indication of complete reset 144, indicating that all the supply voltages V(2)-V(B) were fully cycled, indicates that any previously stored data in the IC 110 is no longer retained, and no safety measures are needed to protect against exposure of such data.

On the other hand, the indication of incomplete reset 142 indicates that at least one of the supply voltages V(2)-V(B) was not fully cycled and, therefore, there may be confidential data that would be vulnerable to unauthorized access if normal operation was resumed. Thus, in response to the indication of incomplete reset 142, the IC 110 may take one or more of a plurality of precautionary actions. For example, because the power supply 112 is outside the IC 110 and may not be under the control of the IC 110, the IC 110 may not be able to force the power supply 112 to reset the supply voltages V(2)-V(B) and reboot explicitly (platform is malicious in this view). In this example, the IC 110 could halt the booting process and prevent execution of any instructions, leaving the IC 110 in a locked-down state from a security perspective (no running firmware, debug controls disabled).

In another example, in response to the indication of incomplete reset 142, the IC 110 proceeds with a degraded boot operation in which some external debug capabilities are disabled, such that scanning or dumping internal memory circuits is prevented. In another example, in response to the indication of incomplete reset 142, before continuing to normal operation, an internal memory purging mechanism may be implemented to clear the states of internal memory and storage circuits, which may be achieved using, for example, built-in test and scan circuitry. Generally, these options are directed to sanitize or render inaccessible confidential data that may be retained in the memory and storage circuits in the IC 110. In still another example, normal operation may be allowed to proceed despite the indication of incomplete reset 142.

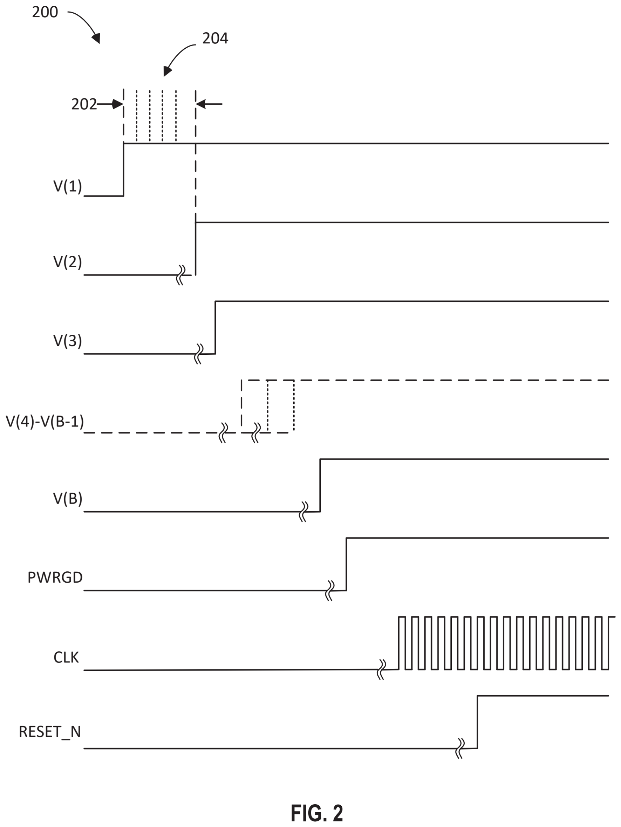

Figure 2 is a timing diagram 200 showing the supply voltages V(1)-V(B) of the power rails 104(1)-104(B) in a power-up sequence in the processor system of Figure 1 following a reset event. The supply voltages V(1)-V(B) increase (in order from 1 to B) from a reset state of zero (0 volts) or near-zero volts to a desired operating voltage, which may vary among the power rails 104(1)-104(B). The power good signal PWRGD is activated after the last supply voltage V(B) is increased to an operating voltage, which means that all circuits are being supplied an operating voltage. In response to the power good signal PWRGD being activated, a clock generation circuit in the processor system 100 generates a system clock signal CLK for switching the sequential logic circuits in the processor system 100. After the clock signal CLK begins oscillating, the reset signal RESET_N is deactivated. In response to the deactivation of the reset signal RESET_N, the circuits 102(1)-102(A) in the IC 110 and other circuits in the processor system 100 in Figure 1 may begin operation.

A time window 202, between the rise of supply voltage V(1) and supply voltage V(2) in the power-up sequence, may be several milliseconds in length. During this time window 202, there may be multiple (e.g., consecutive) periods 204, such as periods 118(1)-118(C), in which the measurements 108(2)(1)-108(B)(C) of the supply voltages V(2)-V(B) are captured as described above. The entire power-up sequence, after the increase of V(1) and through to the activation of the power good signal PWRGD, may be hundreds of milliseconds. With the voltages V(1)-V(B) on all the power rails 104(1)-104(B) at a normal operating level, the IC 110 may read the measurements 108(2)(1)-108(B)(C) stored in the memory circuit 120.

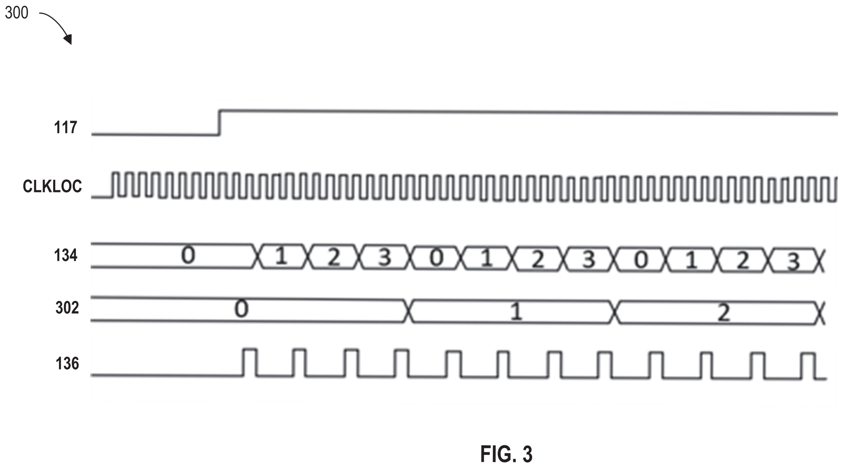

Figure 3 is a timing diagram 300 illustrating control signals in the boot detection circuit 106 in Figure 1 for storing voltage measurements 108(2)(1)-108(B)(C). The timing diagram 300 includes the capture start signal 117 generated by the voltage capture circuit 116 to start the process of capturing the measurements 108(2)(1)-108(B)(C) in the memory circuit 120. The timing diagram 300 includes the local clock signal CLKLOC generated in the clock generator 124. The timing diagram 300 also includes the selection signal 134 from the control circuit 128 to control the selector circuit 130 to select one of supply voltages V(2)-V(B) (where B=5 in this example) as the selected voltage VSEL that will be measured and recorded in the voltage capture circuit 116. A selection signal 134 value of "0" in Figure 3 may select the supply voltage V(2), and the values "1"-"3" may be used to select, respectively, the supply voltages V(3)-V(5).

The timing diagram includes a period indication 302 that may be generated by the control circuit 128 and provided to the memory circuit 120 to associate the digital measurement DM of the selected voltage VSEL with the period in which the digital measurement DM is recorded. The timing diagram 300 also includes the capture signal 136 from the control circuit 128, which may be used to trigger the voltage capture circuit 116 to generate the digital measurement DM of the selected voltage VSEL and trigger the memory circuit 120 to record the digital measurements DMs associated with each supply voltage V(2)-V(B) and each period 118(1)-118(C) in the memory circuit 120.

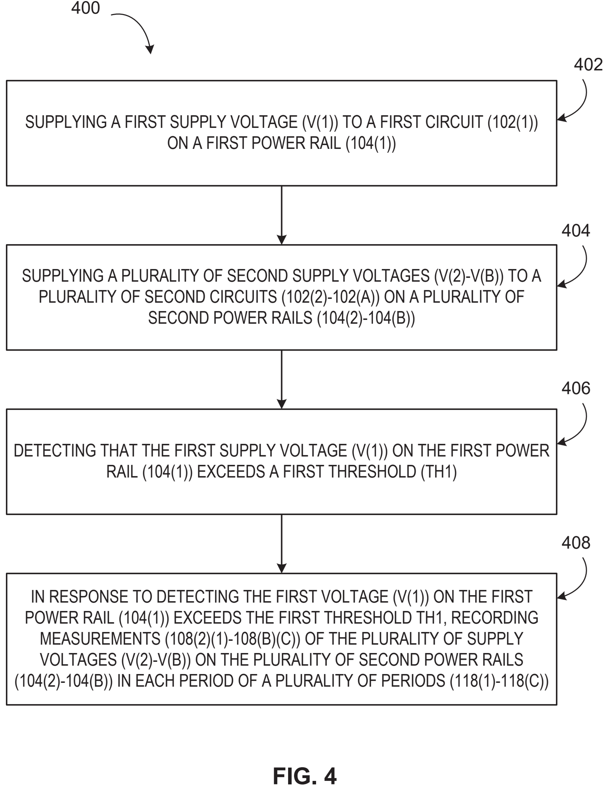

Figure 4 is a flowchart of a method 400 in a processor system, such as the processor system 100 in Figure 1. The method includes supplying a first supply voltage V(1) to a first circuit 102(1) on a first power rail 104(1) (block 402) and supplying a plurality of second supply voltages V(2)-V(B) to a plurality of second circuits 102(2)-102(A) on a plurality of second power rails 104(2)-104(B) (block 404). The method 400 further includes detecting that the first supply voltage V(1) on the first power rail 104(1) exceeds a first threshold TH1 (block 406) and, in response to detecting the first voltage V(1) on the first power rail 104(1) exceeds the first threshold TH1, recording measurements 108(2)(1)-108(B)(C) of the plurality of supply voltages V(2)-V(B) on the plurality of second power rails 104(2)-104(B) in each period of a plurality of periods 118(1)-118(C) (block 408).

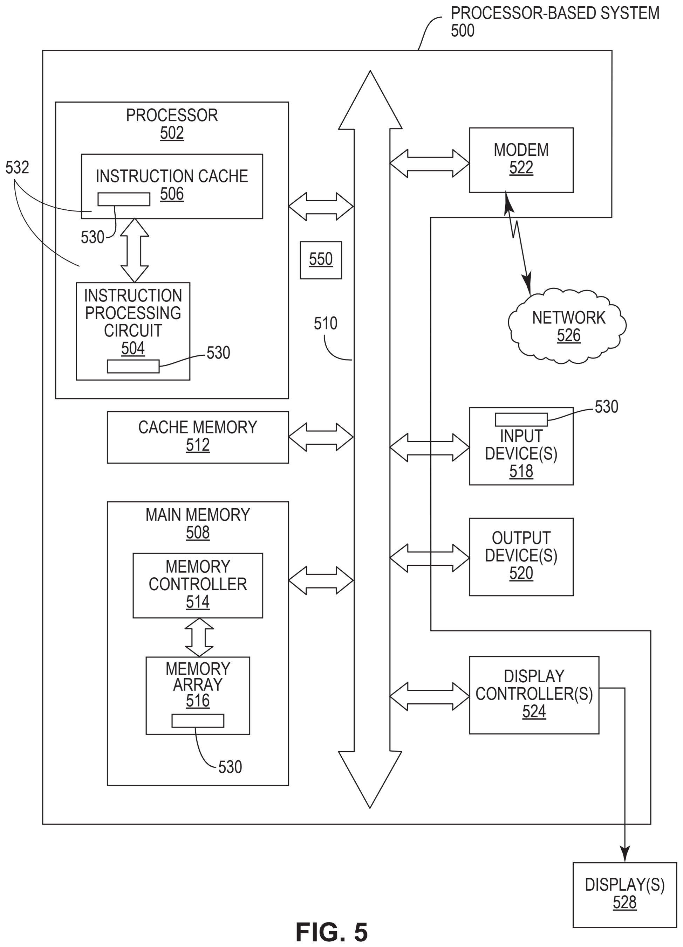

Figure 5 is a block diagram of an exemplary processor-based system 500 that includes a processor 502 (e.g., a microprocessor), including an instruction processing circuit 504. The processor-based system 500 may include integrated circuits on an electronic board or card, such as a printed circuit board (PCB), in a server, a personal computer, a desktop computer, a laptop computer, a personal digital assistant (PDA), a computing pad, a mobile device, or any other device, and may represent, for example, a server, or a user's computer. In this example, the processor-based system 500 includes the processor 502. The processor 502 represents one or more general-purpose processing circuits, such as a microprocessor, central processing unit, or the like. More particularly, the processor 502 may be an EDGE instruction set microprocessor or other processor implementing an instruction set that supports explicit consumer naming for communicating produced values resulting from the execution of producer instructions.

The processor 502 is configured to execute instructions for performing the operations and steps discussed herein. In this example, the processor 502 includes an instruction cache 506 for temporary, fast access memory storage of instructions accessible by the instruction processing circuit 504. Fetched or prefetched instructions from a memory, such as a main memory 508, over a system bus 510, are stored in the instruction cache 506. Data may be stored in a cache memory 512 coupled to the system bus 510 for low-latency access by the processor 502. The instruction processing circuit 504 is configured to process instructions fetched into the instruction cache 506 and process the instructions for execution.

The processor 502 and the main memory 508 are coupled to the system bus 510 and can intercouple peripheral devices included in the processor-based system 500. As is well known, the processor 502 communicates with these other devices by exchanging address, control, and data information over the system bus 510. For example, the processor 502 can communicate bus transaction requests to a memory controller 514 in the main memory 508 as an example of a slave device. Although not illustrated in Figure 5, multiple system buses 510 could be provided, wherein each system bus 510 constitutes a different fabric. In this example, the memory controller 514 is configured to provide memory access requests to a memory array 516 in the main memory 508. The memory array 516 is comprised of an array of storage bit cells for storing data. The main memory 508 may be a read-only memory (ROM), flash memory, dynamic random-access memory (DRAM), such as synchronous DRAM (SDRAM), etc. and/or static memory (e.g., flash memory, SRAM, etc.), as non-limiting examples.

Other devices can be connected to the system bus 510. As illustrated in Figure 5, these devices can include the main memory 508, one or more input device(s) 518, one or more output device(s) 520, a modem 522, and one or more display controllers 524, as examples. The input device(s) 518 can include any type of input device, including but not limited to input keys, switches, voice processors, etc. The output device(s) 520 can include any type of output device, including but not limited to audio, video, other visual indicators, etc. The modem 522 can be any device configured to allow an exchange of data to and from a network 526. The network 526 can be any type of network, including but not limited to a wired network (e.g., ethernet) or wireless network, a private or public network, a local area network (LAN), a wireless local area network (WLAN), a wide area network (WAN), a BLUETOOTH^{™} network, and the Internet. The modem 522 can be configured to support any type of communications protocol desired. The processor 502 may also be configured to access the display controller(s) 524 over the system bus 510 to control information sent to one or more displays 528. The display(s) 528 can include any type of display, including but not limited to a cathode ray tube (CRT), a liquid crystal display (LCD), a plasma display, etc.

The processor-based system 500 in Figure 5 may include a set of instructions 530 to be executed by the processor 502 for any application desired according to the instructions. The instructions 530 may be stored in the main memory 508, the processor 502, and/or the instruction cache 506 as examples of a non-transitory computer-readable medium 532. The instructions 530 may also reside, completely or at least partially, within the main memory 508 and/or within the processor 502 during their execution. The instructions 530 may further be transmitted or received over the network 526 via the modem 522, such that the network 526 includes the computer-readable medium 532.

While the computer-readable medium 532 is shown in an exemplary embodiment to be a single medium, the term "computer-readable medium" should be taken to include a single medium or multiple media (e.g., a centralized or distributed database and/or associated caches and servers) that store the one or more sets of instructions. The term "computer-readable medium" shall also be taken to include any medium that is capable of storing, encoding, or carrying a set of instructions for execution by the processing device and that causes the processing device to perform any one or more of the methodologies of the embodiments disclosed herein. The term "computer-readable medium" shall accordingly be taken to include, but not be limited to, solid-state memories, optical medium, and magnetic medium.

The embodiments disclosed herein include various steps. The steps of the embodiments disclosed herein may be formed by hardware components or may be embodied in machine-executable instructions, which may be used to cause a general-purpose or special-purpose processor programmed with the instructions to perform the steps. Alternatively, the steps may be performed by a combination of hardware and software.

The embodiments disclosed herein may be provided as a computer program product or software that may include a machine-readable medium (or a computer-readable medium) having stored thereon instructions, which may be used to program a computer system (or other electronic devices) to perform a process according to the embodiments disclosed herein. A machine-readable medium includes any mechanism for storing or transmitting information in a form readable by a machine (e.g., a computer). For example, a machine-readable medium includes a machine-readable storage medium (e.g., ROM, random access memory ("RAM"), a magnetic disk storage medium, an optical storage medium, flash memory devices, etc.), and the like.

Unless specifically stated otherwise and as apparent from the previous discussion, it is appreciated that throughout the description, discussions utilizing terms such as "processing," "computing," "determining," "displaying," or the like refer to the action and processes of a computer system, or similar electronic computing device, that manipulates and transforms data and memories represented as physical (electronic) quantities within the computer system's registers into other data similarly represented as physical quantities within the computer system memories or registers or other such information storage, transmission, or display devices.

The algorithms and displays presented herein are not inherently related to any particular computer or other apparatus. Various systems may be used with programs in accordance with the teachings herein, or it may prove convenient to construct more specialized apparatuses to perform the required method steps. The required structure for a variety of these systems will appear from the description above. In addition, the embodiments described herein are not described with reference to any particular programming language. It will be appreciated that a variety of programming languages may be used to implement the teachings of the embodiments as described herein.

Those of skill in the art will further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends on the particular application, design choices, and/or design constraints imposed on the overall system. Skilled artisans may implement the described functionality in varying ways for each particular application, but such implementation decisions should not be interpreted as causing a departure from the scope of the present embodiments.

The various illustrative logical blocks, modules, and circuits described in connection with the embodiments disclosed herein may be implemented or performed with a processor, a Digital Signal Processor (DSP), an Application Specific Integrated Circuit (ASIC), a Field Programmable Gate Array (FPGA), or other programmable logic device, a discrete gate or transistor logic, discrete hardware components, or any combination thereof designed to perform the functions described herein. Furthermore, a controller may be a processor. A processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The embodiments disclosed herein may be embodied in hardware and in instructions that are stored in hardware and may reside, for example, in RAM, flash memory, ROM, Electrically Programmable ROM (EPROM), Electrically Erasable Programmable ROM (EEPROM), registers, a hard disk, a removable disk, a CD-ROM, or any other form of computer-readable medium known in the art. An exemplary storage medium is coupled to the processor such that the processor can read information from and write information to the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

The present disclosure is supplemented by the following set of examples.

Example 1: A boot detection circuit 106, comprising: a voltage detection circuit 114 configured to detect that a first supply voltage V(1) associated with a power-up sequence of a processor system 100 has reached a first threshold TH1 associated with the power-up sequence of the processor system 100, the processor system 100 comprising a volatile memory circuit configured to store data; and a voltage capture circuit 116 configured to: in response to detecting that the first supply voltage V(1) has reached the first threshold TH1, determining, during a time window 202 of a reset event, that a second supply voltage V(2) failed to remain below a low-voltage threshold TH2 for time sufficient to result in erasure of the data, the second supply voltage V(2) supplying the volatile memory circuit; and wherein the boot detection circuit is configured, in response to determining, during the time window 202 of the reset event, that the second supply voltage V(2) failed to remain below the low-voltage threshold TH2 for time sufficient to result in erasure of the data, to generate an indication that indicates an incomplete reset.

Example 2: The boot detection circuit of Example 1, wherein: the volatile memory circuit supplied by the second supply voltage is one of a plurality of volatile memory circuits of the processor system, each of the plurality of volatile memory circuits being associated with a respective low-voltage threshold, including the volatile memory circuit supplied by the second supply voltage being associated with the low-voltage threshold; determining, during the time window of the reset event, that the second supply voltage failed to remain below the low-voltage threshold for time sufficient to result in erasure of the data is performed for each second supply voltage of a plurality of second supply voltages, the plurality of second supply voltages comprising the second supply voltage, each second supply voltage of the plurality of second supply voltages supplying a respective volatile memory circuit of the plurality of volatile memory circuits; and determining, during the time window of the reset event, that the second supply voltage failed to remain below the low-voltage threshold for time sufficient to result in erasure of the data comprises determining, during the time window of the reset event, that not all of the plurality of second supply voltages remained below their respective low-voltage thresholds for time sufficient to result in erasure of data stored in their respective volatile memory circuits.

Example 3: The boot detection circuit of Example 1 or Example 2, wherein: determining, during the time window of the reset event, that the second supply voltage failed to remain below the low-voltage threshold for time sufficient to result in erasure of the data comprises recording a measurement of the second supply voltage in each period of a plurality of periods, wherein the plurality of periods is within the time window of the reset event.

Example 4: The boot detection circuit of Example 3, wherein determining, during the time window of the reset event, that the second supply voltage failed to remain below the low-voltage threshold for time sufficient to result in erasure of the data further comprises: receiving a local supply voltage; receiving a local clock signal; in each period of the plurality of periods, for the second supply voltage, sequentially: coupling the second supply voltage to a measurement node; generating a digital measurement of the second supply voltage on the measurement node; and recording the digital measurement of the second supply voltage.

Example 5: The boot detection circuit of Example 4, further comprising: a successive approximation register (SAR) analog-to-digital converter (ADC) wherein determining, during the time window of the reset event, that the second supply voltage failed to remain below the low-voltage threshold for time sufficient to result in erasure of the data further comprises: receiving a reference voltage in response to the first supply voltage reaching the first threshold; and in the SAR ADC, for the second supply voltage, comparing a selected voltage on the measurement node to the reference voltage.

Example 6: A processor system 100, comprising: a volatile memory circuit configured to store data; and a boot detection circuit 106 configured to: detect that a first supply voltage V(1) associated with a power-up sequence of the processor system 100 has reached a first threshold TH1 associated with the power-up sequence of the processor system 100; in response to detecting that the first supply voltage V(1) has reached the first threshold TH1, determining, during a time window 202 of a reset event, that a second supply voltage V(2) failed to remain below a low-voltage threshold TH2 for time sufficient to result in erasure of the data, the second supply voltage V(2) supplying the volatile memory circuit; and in response to determining, during the time window 202 of the reset event, that the second supply voltage V(2) failed to remain below the low-voltage threshold TH2 for time sufficient to result in erasure of the data, generate an indication that indicates an incomplete reset.

Example 7: The processor system of Example 6, further comprising: a plurality of volatile memory circuits, the volatile memory circuit supplied by the second supply voltage being one of the plurality of volatile memory circuits, each of the plurality of volatile memory circuits being associated with a respective low-voltage threshold, including the volatile memory circuit supplied by the second supply voltage being associated with the low-voltage threshold, wherein: determining, during the time window of the reset event, that the second supply voltage failed to remain below the low-voltage threshold for time sufficient to result in erasure of the data is performed for each second supply voltage of a plurality of second supply voltages, the plurality of second supply voltages comprising the second supply voltage, each second supply voltage of the plurality of second supply voltages supplying a respective volatile memory circuit of the plurality of volatile memory circuits; and determining, during the time window of the reset event, that the second supply voltage failed to remain below the low-voltage threshold for time sufficient to result in erasure of the data comprises determining, during the time window of the reset event, that not all of the plurality of second supply voltages remained below their respective low-voltage thresholds for time sufficient to result in erasure of data stored in their respective volatile memory circuits.

Example 8: The processor system of Example 6 or Example 7, wherein : determining, during the time window of the reset event, that the second supply voltage failed to remain below the low-voltage threshold for time sufficient to result in erasure of the data comprises recording a measurement of the second supply voltage in each period of a plurality of periods, wherein the plurality of periods is within the time window of the reset event.

Example 9: The processor system of Example 8, wherein: the boot detection circuit comprises a memory circuit; and determining, during the time window of the reset event, that the second supply voltage failed to remain below the low-voltage threshold for time sufficient to result in erasure of the data further comprises: recording, in the memory circuit, the measurements of the second supply voltage in each period of the plurality of periods; reading the recorded measurements; and determining, in response to the recorded measurements, that the second supply voltage failed to remain below the low-voltage threshold for time sufficient to result in erasure of the data.

Example 10: The processor system of Example 8 or Example 9, wherein determining, during the time window of the reset event, that the second supply voltage failed to remain below the low-voltage threshold for time sufficient to result in erasure of the data further comprises: generating a local supply voltage; generating a local clock signal; in each period of the plurality of periods, for the second supply voltage, sequentially: coupling the second supply voltage to a measurement node; generating a digital measurement of the second supply voltage on the measurement node; and recording the digital measurement of the second supply voltage.

Example 11: The processor system of Example 10, wherein: the boot detection circuit comprises a successive approximation register (SAR) analog-to-digital converter (ADC); and determining, during the time window of the reset event, that the second supply voltage failed to remain below the low-voltage threshold for time sufficient to result in erasure of the data further comprises: generating a reference voltage in response to the first supply voltage reaching the first threshold; and in the SAR ADC, for the second supply voltage, comparing a selected voltage on the measurement node to the reference voltage.

Example 12: A method, comprising: detecting that a first supply voltage V(1) associated with a power-up sequence of a processor system 100 has reached a first threshold TH1 associated with the power-up sequence of the processor system 100, the processor system 100 comprising a volatile memory circuit configured to store data; in response to detecting that the first supply voltage V(1) has reached the first threshold TH1, determining, during a time window 202 of a reset event, that a second supply voltage V(2) failed to remain below a low-voltage threshold TH2 for time sufficient to result in erasure of the data, the second supply voltage V(2) supplying the volatile memory circuit; and in response to determining, during the time window 202 of the reset event, that the second supply voltage V(2) failed to remain below the low-voltage threshold TH2 for time sufficient to result in erasure of the data, generating an indication that indicates an incomplete reset.

Example 13: The method of Example 12, wherein: the volatile memory circuit supplied by the second supply voltage is one of a plurality of volatile memory circuits of the processor system, each of the plurality of volatile memory circuits being associated with a respective low-voltage threshold, including the volatile memory circuit supplied by the second supply voltage being associated with the low-voltage threshold; determining, during the time window of the reset event, that the second supply voltage failed to remain below the low-voltage threshold for time sufficient to result in erasure of the data is performed for each second supply voltage of a plurality of second supply voltages, the plurality of second supply voltages comprising the second supply voltage, each second supply voltage of the plurality of second supply voltages supplying a respective volatile memory circuit of the plurality of volatile memory circuits; and determining, during the time window of the reset event, that the second supply voltage failed to remain below the low-voltage threshold for time sufficient to result in erasure of the data comprises determining, during the time window of the reset event, that not all of the plurality of second supply voltages remained below their respective low-voltage thresholds for time sufficient to result in erasure of data stored in their respective volatile memory circuits.

Example 14: The method of Example 12 or Example 13, further comprising: in response to determining, during the time window of the reset event, that the second supply voltage failed to remain below the low-voltage threshold for time sufficient to result in erasure of the data, preventing execution of instructions in the processor system.

Example 15: The method of any of Examples 12 to 14, further comprising: determining, during a time window of another reset event, that the second supply voltage remained below the low-voltage threshold for time sufficient to result in erasure of the data; and determining, during the time window of the other reset event, that the second supply voltage remained below the low-voltage threshold for time sufficient to result in erasure of the data, initiating normal operation of the processor system.

Example 16: The method of any of Examples 12 to 15, wherein: determining, during the time window of the reset event, that the second supply voltage failed to remain below the low-voltage threshold for time sufficient to result in erasure of the data comprises recording a measurement of the second supply voltage in each period of a plurality of periods, wherein the plurality of periods is within the time window of the reset event.

Example 17: The method of Example 16, wherein determining, during the time window of the reset event, that the second supply voltage failed to remain below the low-voltage threshold for time sufficient to result in erasure of the data further comprises: generating a capture start signal in response to the first supply voltage reaching the first threshold; and initiating recording of the measurements of the second supply voltage in response to the capture start signal.

Example 18: The method of Example 16 or Example 17, wherein determining, during the time window of the reset event, that the second supply voltage failed to remain below the low-voltage threshold for time sufficient to result in erasure of the data further comprises: recording the measurements of the second supply voltage in each period of the plurality of periods; reading the recorded measurements; and determining, in response to the recorded measurements, that the second supply voltage failed to remain below the low-voltage threshold for time sufficient to result in erasure of the data.

Example 19: The method of any of Examples 16 to 18, wherein determining, during the time window of the reset event, that the second supply voltage failed to remain below the low-voltage threshold for time sufficient to result in erasure of the data further comprises: generating a local supply voltage; generating a local clock signal; in each period of the plurality of periods, for the second supply voltage, sequentially: coupling the second supply voltage to a measurement node; generating a digital measurement of the second supply voltage on the measurement node; and recording the digital measurement of the second supply voltage.

Example 20: The method of Example 19, wherein: the processor system further comprises a successive approximation register (SAR) analog-to-digital converter (ADC); and determining, during the time window of the reset event, that the second supply voltage failed to remain below the low-voltage threshold for time sufficient to result in erasure of the data further comprises: generating a reference voltage in response to the first supply voltage reaching the first threshold; and in the SAR ADC, for the second supply voltage, comparing a selected voltage on the measurement node to the reference voltage.

The present disclosure is additionally supplemented by the following set of examples.

Example 1A: A processor system, comprising: a plurality of circuits comprising a first circuit and a plurality of second circuits; a first power rail coupled to the first circuit to provide a first supply voltage to the first circuit; a plurality of second power rails, each coupled to a corresponding second circuit of the plurality of second circuits and configured to provide a corresponding second supply voltage of a plurality of second supply voltages to the corresponding second circuit; and a boot detection circuit configured to: detect the first supply voltage on the first power rail exceeds a first threshold; and in response to the first supply voltage on the first power rail exceeding the first threshold, record a measurement of each of the plurality of second supply voltages of the plurality of second power rails in each period of a plurality of periods.

Example 2A: The processor system of Example 1A, the boot detection circuit further comprising: a first voltage detection circuit configured to, in response to the first supply voltage on the first power rail exceeding the first threshold: generate a local supply voltage; and generate a local clock signal; and a voltage capture circuit configured to: receive the local supply voltage and the local clock signal; and in each period of the plurality of periods: couple each second supply voltage of the plurality of second supply voltages to a measurement node, one by one sequentially; generate, for each second supply voltage, the measurement comprising a digital measurement of the second supply voltage on the measurement node; and record the digital measurement for each second supply voltage.

Example 3A: The processor system of Example 2A, wherein: the first voltage detection circuit is further configured to generate a reference voltage in response to the first supply voltage on the first power rail exceeding the first threshold; and the voltage capture circuit further comprises a successive approximation register (SAR) analog-to-digital converter (ADC), configured to, for each second supply voltage sequentially coupled to the measurement node, compare the second supply voltage to the reference voltage.

Example 4A: The processor system of Example 2A, wherein: the first voltage detection circuit is further configured to generate a capture start signal in response to the first supply voltage on the first power rail exceeding the first threshold; and the voltage capture circuit is configured to initiate recording measurements of the plurality of second supply voltages in response to the capture start signal.

Example 5A: The processor system of Example 1A, further comprising a voltage generator configured to supply the first supply voltage to the first power rail before supplying the plurality of second supply voltages on the plurality of second power rails.

Example 6A: The processor system of Example 5A, wherein the first circuit comprises a general-purpose input output (GPIO) circuit.

Example 7A: The processor system of Example 1A, further comprising a memory circuit configured to record the measurements of each second supply voltage of the plurality of second supply voltages in each period of the plurality of periods, wherein the plurality of second circuits comprises a processor circuit configured to: read the measurements recorded in the memory circuit; determine, based on the recorded measurements read from the memory circuit, whether each second supply voltage of the plurality of second supply voltages completely cycled; and generate an indication of incomplete reset in response to determining that at least one second supply voltage of the plurality of second supply voltages did not completely cycle.

Example 8A: A method in a processor system, the method comprising: supplying a first supply voltage to a first circuit on a first power rail; supplying a plurality of second supply voltages to a plurality of second circuits on a plurality of second power rails; detecting that the first supply voltage on the first power rail exceeds a first threshold; and in response to detecting the first supply voltage on the first power rail exceeds the first threshold, recording measurements of the plurality of second supply voltages on the plurality of second power rails in each period of a plurality of periods.

Example 9A: The method of Example 8A, further comprising: in response to the first supply voltage on the first power rail exceeding the first threshold: generating a local supply voltage; and generating a local clock signal; and in each period of the plurality of periods, for each second supply voltage of the plurality of second supply voltages, sequentially: coupling a second supply voltage to a measurement node; generating a digital measurement of the second supply voltage on the measurement node; and recording the digital measurement of the second supply voltage.

Example 10A: The method of Example 9A, further comprising: generating a reference voltage in response to the first supply voltage on the first power rail exceeding the first threshold; and in a successive approximation register (SAR) analog-to-digital converter (ADC), for each second supply voltage of the plurality of second supply voltages, comparing a selected voltage on the measurement node to the reference voltage.

Example 11A: The method of Example 8A, further comprising: generating a capture start signal in response to the first supply voltage on the first power rail exceeding the first threshold; and initiating recording of the measurements of the plurality of second supply voltages in response to the capture start signal.

Example 12A: The method of Example 8A, further comprising, in a power supply, supplying the first supply voltage on the first power rail before supplying the plurality of second supply voltages on the plurality of second power rails.

Example 13A: The method of Example 12A, further comprising providing the first supply voltage to a general-purpose input output (GPIO) circuit on the first power rail.

Example 14A: The method of Example 9A, further comprising: storing the digital measurement of each of the plurality of second supply voltages in a memory circuit in each period of the plurality of periods; reading the digital measurements recorded in the memory circuit; determining, based on the digital measurements, whether each of the plurality of second supply voltages was completely cycled; and generating an indication of incomplete reset in response to determining the plurality of second supply voltages did not completely cycle.

Example 15A: The method of Example 14A, further comprising, in response to determining the plurality of second supply voltages was completely cycled, initiating normal operation.

Example 16A: A boot detection circuit comprising: a first voltage detection circuit configured to detect that a first supply voltage on a first power rail in a processor system exceeds a first threshold; and a voltage capture circuit configured to, in response to the first voltage detection circuit detecting the first supply voltage on the first power rail exceeds the first threshold, record, in each period of a plurality of periods, digital measurements of each second supply voltage of a plurality of second supply voltages on a plurality of second power rails in the processor system.

Example 17A: The boot detection circuit of Example 16A, wherein: the first voltage detection circuit is further configured to, in response to the first supply voltage on the first power rail exceeding the first threshold: generate a local supply voltage to power the voltage capture circuit; and generate a local clock signal; and the voltage capture circuit comprises a measurement node, and the voltage capture circuit is further configured to, in each period of the plurality of periods, for each second supply voltage of the plurality of second supply voltages, sequentially: couple a second supply voltage to the measurement node; generate the digital measurement of the second supply voltage on the measurement node; and record the digital measurement on the measurement node.

Example 18A: The boot detection circuit of Example 17A, wherein: the first voltage detection circuit is further configured to generate a reference voltage in response to the first supply voltage on the first power rail exceeding the first threshold; and the voltage capture circuit further comprises a successive approximation register (SAR) analog-to-digital converter (ADC) configured to, for each second power rail of the plurality of second power rails, compare the selected voltage on the measurement node to the reference voltage.

Example 19A: The boot detection circuit of Example 18A, wherein: the first voltage detection circuit is further configured to generate a capture start signal in response to the first supply voltage on the first power rail exceeding the first threshold; and the voltage capture circuit is further configured to initiate recording of the digital measurements of the plurality of second supply voltages in response to the capture start signal.

Example 20A: The boot detection circuit of Example 16A, wherein the voltage capture circuit further comprises a memory circuit configured to store the digital measurements of the plurality of second supply voltages in each period of the plurality of periods.

Disclosed herein a processor system may include multiple circuits that are each powered by their own power rails. Incomplete cycling of system power may fail to discharge memory circuits, leaving that data vulnerable to unauthorized access upon reboot. A processor system includes a boot detection circuit that, upon detecting a threshold voltage on a first power rail in the bootup sequence, captures voltage measurements on each of the remaining power rails in multiple time periods, wherein the captured voltage measurements may be analyzed to determine whether the voltages on the power rails fully cycled to a sufficiently low voltage and remained there for a sufficient time to ensure that memory circuits adequately discharged. The power system may proceed to generate an indication of complete reset or incomplete reset depending on the voltage measurements stored in the memory. In this way, the confidentiality of data previously stored in the memory circuits is protected.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. Those of skill in the art will also understand that information and signals may be represented using any of a variety of technologies and techniques. For example, data, instructions, commands, information, signals, bits, symbols, and chips that may be referenced throughout the above description may be represented by voltages, currents, electromagnetic waves, magnetic fields, optical fields, or particles, or any combination thereof.

Unless otherwise expressly stated, it is in no way intended that any method set forth herein be construed as requiring that its steps be performed in a specific order. Accordingly, where a method claim does not actually recite an order to be followed by its steps, or it is not otherwise specifically stated in the claims or descriptions that the steps are to be limited to a specific order, it is in no way intended that any particular order be inferred.

It will be apparent to those skilled in the art that various modifications and variations can be made without departing from the scope of the invention. Since modifications, combinations, sub-combinations, and variations of the disclosed embodiments incorporating the substance of the invention may occur to persons skilled in the art, the invention should be construed to include everything within the scope of the appended claims and their equivalents.

## Claims

1. A boot detection circuit (106), comprising:
a voltage detection circuit (114) configured to detect that a first supply voltage (V(1)) associated with a power-up sequence of a processor system (100) has reached a first threshold (TH1) associated with the power-up sequence of the processor system (100), the processor system (100) comprising a volatile memory circuit configured to store data; and
a voltage capture circuit (116) configured to:
in response to detecting that the first supply voltage (V(1)) has reached the first threshold (TH1), determining, during a time window (202) of a reset event, that a second supply voltage (V(2)) failed to remain below a low-voltage threshold (TH2) for time sufficient to result in erasure of the data, the second supply voltage (V(2)) supplying the volatile memory circuit; and
wherein the boot detection circuit is configured, in response to determining, during the time window (202) of the reset event, that the second supply voltage (V(2)) failed to remain below the low-voltage threshold (TH2) for time sufficient to result in erasure of the data, to generate an indication that indicates an incomplete reset.

2. The boot detection circuit of claim 1, wherein:
the volatile memory circuit supplied by the second supply voltage is one of a plurality of volatile memory circuits of the processor system, each of the plurality of volatile memory circuits being associated with a respective low-voltage threshold, including the volatile memory circuit supplied by the second supply voltage being associated with the low-voltage threshold;
determining, during the time window of the reset event, that the second supply voltage failed to remain below the low-voltage threshold for time sufficient to result in erasure of the data is performed for each second supply voltage of a plurality of second supply voltages, the plurality of second supply voltages comprising the second supply voltage, each second supply voltage of the plurality of second supply voltages supplying a respective volatile memory circuit of the plurality of volatile memory circuits; and
determining, during the time window of the reset event, that the second supply voltage failed to remain below the low-voltage threshold for time sufficient to result in erasure of the data comprises determining, during the time window of the reset event, that not all of the plurality of second supply voltages remained below their respective low-voltage thresholds for time sufficient to result in erasure of data stored in their respective volatile memory circuits.

3. The boot detection circuit of claim 1 or claim 2, wherein:
determining, during the time window of the reset event, that the second supply voltage failed to remain below the low-voltage threshold for time sufficient to result in erasure of the data comprises recording a measurement of the second supply voltage in each period of a plurality of periods, wherein the plurality of periods is within the time window of the reset event.

4. The boot detection circuit of claim 3, wherein determining, during the time window of the reset event, that the second supply voltage failed to remain below the low-voltage threshold for time sufficient to result in erasure of the data further comprises:
receiving a local supply voltage;
receiving a local clock signal;
in each period of the plurality of periods, for the second supply voltage, sequentially:
coupling the second supply voltage to a measurement node;
generating a digital measurement of the second supply voltage on the measurement node; and
recording the digital measurement of the second supply voltage.

5. The boot detection circuit of claim 4, further comprising:
a successive approximation register, SAR, analog-to-digital converter, ADC, wherein determining, during the time window of the reset event, that the second supply voltage failed to remain below the low-voltage threshold for time sufficient to result in erasure of the data further comprises:
receiving a reference voltage in response to the first supply voltage reaching the first threshold; and
in the SAR ADC, for the second supply voltage, comparing a selected voltage on the measurement node to the reference voltage.

6. A processor system (100), comprising:
a volatile memory circuit configured to store data; and
a boot detection circuit (106) configured to:
detect that a first supply voltage (V(1)) associated with a power-up sequence of the processor system (100) has reached a first threshold (TH1) associated with the power-up sequence of the processor system (100);
in response to detecting that the first supply voltage (V(1)) has reached the first threshold (TH1), determining, during a time window (202) of a reset event, that a second supply voltage (V(2)) failed to remain below a low-voltage threshold (TH2) for time sufficient to result in erasure of the data, the second supply voltage (V(2)) supplying the volatile memory circuit; and
in response to determining, during the time window (202) of the reset event, that the second supply voltage (V(2)) failed to remain below the low-voltage threshold (TH2) for time sufficient to result in erasure of the data, generate an indication that indicates an incomplete reset.

7. The processor system of claim 6, further comprising:
a plurality of volatile memory circuits, the volatile memory circuit supplied by the second supply voltage being one of the plurality of volatile memory circuits, each of the plurality of volatile memory circuits being associated with a respective low-voltage threshold, including the volatile memory circuit supplied by the second supply voltage being associated with the low-voltage threshold, wherein:
determining, during the time window of the reset event, that the second supply voltage failed to remain below the low-voltage threshold for time sufficient to result in erasure of the data is performed for each second supply voltage of a plurality of second supply voltages, the plurality of second supply voltages comprising the second supply voltage, each second supply voltage of the plurality of second supply voltages supplying a respective volatile memory circuit of the plurality of volatile memory circuits; and
determining, during the time window of the reset event, that the second supply voltage failed to remain below the low-voltage threshold for time sufficient to result in erasure of the data comprises determining, during the time window of the reset event, that not all of the plurality of second supply voltages remained below their respective low-voltage thresholds for time sufficient to result in erasure of data stored in their respective volatile memory circuits.

8. The processor system of claim 6 or claim 7, wherein :
determining, during the time window of the reset event, that the second supply voltage failed to remain below the low-voltage threshold for time sufficient to result in erasure of the data comprises recording a measurement of the second supply voltage in each period of a plurality of periods, wherein the plurality of periods is within the time window of the reset event.

9. The processor system of claim 8, wherein:
the boot detection circuit comprises a memory circuit; and
determining, during the time window of the reset event, that the second supply voltage failed to remain below the low-voltage threshold for time sufficient to result in erasure of the data further comprises:
recording, in the memory circuit, the measurements of the second supply voltage in each period of the plurality of periods;
reading the recorded measurements; and
determining, in response to the recorded measurements, that the second supply voltage failed to remain below the low-voltage threshold for time sufficient to result in erasure of the data.

10. A method, comprising:
detecting that a first supply voltage (V(1)) associated with a power-up sequence of a processor system (100) has reached a first threshold (TH1) associated with the power-up sequence of the processor system (100), the processor system (100) comprising a volatile memory circuit configured to store data;
in response to detecting that the first supply voltage (V(1)) has reached the first threshold (TH1), determining, during a time window (202) of a reset event, that a second supply voltage (V(2)) failed to remain below a low-voltage threshold (TH2) for time sufficient to result in erasure of the data, the second supply voltage (V(2)) supplying the volatile memory circuit; and
in response to determining, during the time window (202) of the reset event, that the second supply voltage (V(2)) failed to remain below the low-voltage threshold (TH2) for time sufficient to result in erasure of the data, generating an indication that indicates an incomplete reset.

11. The method of claim 10, wherein:
the volatile memory circuit supplied by the second supply voltage is one of a plurality of volatile memory circuits of the processor system, each of the plurality of volatile memory circuits being associated with a respective low-voltage threshold, including the volatile memory circuit supplied by the second supply voltage being associated with the low-voltage threshold;
determining, during the time window of the reset event, that the second supply voltage failed to remain below the low-voltage threshold for time sufficient to result in erasure of the data is performed for each second supply voltage of a plurality of second supply voltages, the plurality of second supply voltages comprising the second supply voltage, each second supply voltage of the plurality of second supply voltages supplying a respective volatile memory circuit of the plurality of volatile memory circuits; and
determining, during the time window of the reset event, that the second supply voltage failed to remain below the low-voltage threshold for time sufficient to result in erasure of the data comprises determining, during the time window of the reset event, that not all of the plurality of second supply voltages remained below their respective low-voltage thresholds for time sufficient to result in erasure of data stored in their respective volatile memory circuits.

12. The method of claim 10 or claim 11, further comprising:
in response to determining, during the time window of the reset event, that the second supply voltage failed to remain below the low-voltage threshold for time sufficient to result in erasure of the data, preventing execution of instructions in the processor system.

13. The method of any of claims 10 to 12, further comprising:
determining, during a time window of another reset event, that the second supply voltage remained below the low-voltage threshold for time sufficient to result in erasure of the data; and
determining, during the time window of the other reset event, that the second supply voltage remained below the low-voltage threshold for time sufficient to result in erasure of the data, initiating normal operation of the processor system.

14. The method of any of claims 10 to claim 13, wherein:
determining, during the time window of the reset event, that the second supply voltage failed to remain below the low-voltage threshold for time sufficient to result in erasure of the data comprises recording a measurement of the second supply voltage in each period of a plurality of periods, wherein the plurality of periods is within the time window of the reset event.

15. The method of claim 14, wherein determining, during the time window of the reset event, that the second supply voltage failed to remain below the low-voltage threshold for time sufficient to result in erasure of the data further comprises:
generating a capture start signal in response to the first supply voltage reaching the first threshold; and
initiating recording of the measurements of the second supply voltage in response to the capture start signal.
